# EUROPÄISCHE PATENTSCHRIFT

(11) **EP 2 592 317 B1**
(45) Veröffentlichungstag und Bekanntmachung des Hinweises auf die Patenterteilung: **14.12.2016**
(21) Anmeldenummer: 12190485.8
(22) Anmeldetag: 30.10.2012
(51) Int. Cl.: F16K 15/18, F16K 31/00

(54) **Ventileinsatz und zugehörige Filtereinrichtung**
Valve insert and related filter device
Garniture de soupape et dispositif filtrant correspondant

(30) Priorität: 09.11.2011 DE 102011085993
(43) Veröffentlichungstag der Anmeldung: 15.05.2013
(73) Patentinhaber: MAHLE International GmbH, 70376 Stuttgart (DE)
(72) Erfinder: Brodt, Michael, 71272 Renningen (DE)
(74) Vertreter: BRP Renaud & Partner mbB Rechtsanwälte Patentanwälte Steuerberater

(56) Entgegenhaltungen:
- EP-A1- 2 080 943
- WO-A1-02/01061
- DE-C1- 3 640 531
- JP-A- 2006 226 468
- US-A- 4 147 180

## Beschreibung

Die vorliegende Erfindung betrifft einen axial durchströmbaren Ventileinsatz. Die Erfindung betrifft außerdem eine Filtereinrichtung mit einem derartigen Ventileinsatz.

Aus der JP 2006-226468 A ist ein gattungsgemäßer axial durchströmbarer Ventileinsatz beschrieben. Der Ventileinsatz weist hierbei ein Rücklaufsperrventil sowie ein koaxial dazu angeordnetes Thermostatventil auf. Das Thermostatventil ist hierbei zumindest teilweise innerhalb des Rücklaufsperrventils angeordnet.

Die US 4,147,180 A1 beschreibt einen Ventileinsatz mit einem Rücklaufsperrventil und einem Thermostatventil, das zum Rücklaufsperrventil koaxial angeordnet und in Reihe geschaltet ist.

In der DE 36 40 531 C1 ist eine Filtereinrichtung mit einem Ventileinsatz offenbart. Der Ventileinsatz weist ein Rücklaufsperrventil und ein mit dem Rücklaufsperrventil in Reihe geschaltetes Thermostatventil auf. Zudem sind das Rücklaufsperrventil und das Thermostatventil jeweils axial durchströmbar.

In der EP 2 080 943 A1 ist eine Ventileinrichtung mit einem Sperrventil und einem Thermostatventil beschrieben, die koaxial angeordnet und in Reihe geschaltet sind.

Bei herkömmlichen Filtereinrichtungen, wie bspw. Ölfiltern, werden sog. Thermostatventile eingesetzt, die das Öl während der Kaltstartphase am Ölkühler vorbeileiten, wodurch sich dieses schneller aufheizen kann und dadurch der Verbrennungsmotor früher seine Betriebstemperatur erreicht. Des Weiteren ist in einem derartigen Ölkreislauf ein Rücklaufsperrventil angeordnet, welches beim Abstellen des Verbrennungsmotors ein Leerlaufen bspw. der Filtereinrichtung verhindert, sodass bei einem Neustart vergleichsweise schnell der erforderliche Öldruck wieder vorhanden ist. Das genannte Rücklaufsperrventil und auch das genannte Thermostatventil sind dabei üblicherweise an separaten Stellen verbaut und benötigen dadurch einen nicht zu unterschätzenden Montageaufwand.

Die vorliegende Erfindung beschäftigt sich daher mit dem Problem, die aus dem Stand der Technik bekannten Nachteile zu überwinden.

Diese Probleme werden erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, das bisher separat zum Thermostatventil ausgebildete Rücklaufsperrventil nunmehr in eine gemeinsame Baugruppe mit diesem zusammenzufassen und dadurch ein Kombinationsventil zu schaffen, welches erfindungsgemäß zudem einen axial durchströmbaren Ventileinsatz besitzt, bei welchem das Rücklaufsperrventil und das Thermostatventil in Reihe zueinander geschaltet sind. Durch die erfindungsgemäße Ausbildung und Anordnung kann nunmehr ein einteiliges Kombinationsventil geschaffen werden, welches aus dem Rücklaufsperrventil und dem Thermostatventil besteht und welches vergleichsweise einfach, nämlich bspw. durch lediglich ein einfaches Einclipsen in einer zugehörigen Filtereinrichtung montiert werden kann. Durch die axiale Durchströmung des Ventileinsatzes kann zudem der dort auftretende Strömungswiderstand deutlich reduziert werden, was sich positiv auf einen Energieverbrauch, bspw. einer Ölpumpe, auswirkt. Des Weiteren weist das erfindungsgemäße Rücklaufsperrventil einen federbeaufschlagten Rücklaufsperrventilkolben und ein Rücklaufsperrventilgehäuse auf, das einerseits eine Führung für den Rücklaufsperrventilkolben bildet und andererseits einen Ventilsitz aufweist. Das Rücklaufsperrventil dient dabei lediglich zur Sicherung gegen ein ungewolltes Leerlaufen, sodass der federbeaufschlagte Rücklaufsperrventilkolben bereits bei geringem Druck öffnet und das von der Pumpe, bspw. der Ölpumpe, geförderte Fluid hindurchlässt. Fördert die Pumpe jedoch nicht mehr, so drückt eine Feder den Rücklaufsperrventilkolben gegen den zugehörigen Ventilsitz und verhindert dadurch zuverlässig ein Leerlaufen, bspw. einer Filtereinrichtung.

Zweckmäßig ist das Rücklaufsperrventilgehäuse mit einem Thermostatventilgehäuse verclipst, wobei in dem Thermostatventilgehäuse ein Temperaturdehnelement, bspw. ein Wachsdehnelement, angeordnet ist, das mit einem inneren federbeaufschlagten Thermostatventilkolben zusammenwirkt. Dieser innere Thermostatventil wiederum wirkt über eine Feder mit einem äußeren Thermostatventilkolben zusammen, wobei der innere Thermostatventilkolben lediglich eine Überlastsicherung für den Fall darstellt, dass der äußere Thermostatventilkolben bereits an einem gehäuseseitigen Ventilsitz anliegt, sich aber das Temperaturdehnelement aufgrund steigender Öltemperatur noch weiter ausdehnt. In diesem Fall wird dann der innere Thermostatventilkolben relativ zum äußeren Thermostatventilkolben verschoben, ohne dass dabei eine Beschädigung des Thermostatventils durch einen zu großen Druck des Temperaturdehnelements zu befürchten ist. Eine Rückstellung des inneren und des äußeren Thermostatventilkolbens erfolgt dabei über jeweils separate Federn, wobei die Feder für den inneren Thermostatventilkolben eine höhere Federkraft besitzt als die Feder für den äußeren Thermostatventilkolben, sodass der innere Thermostatventilkolben ausschließlich dann verstellt wird, wenn ein Weiterverstellen des äußeren Thermostatventilkolbens aufgrund des Anliegens desselben am gehäuseseitigen Ventilsitz nicht mehr möglich ist.

Bei einer weiteren vorteilhaften Ausführungsform der erfindungsgemäßen Lösung sind das Temperaturdehnelement und der innere Thermostatventilkolben miteinander verbunden, insbesondere über einen Presssitz miteinander verbunden. Die Kopplung des Temperaturdehnelements und des inneren Thermostatventilkolbens sichert dabei den Zusammenhalt des gesamten Ventileinsatzes im Bereich zwischen dem Thermostatventilgehäuse und dem äußeren Thermostatventilkolben und ermöglicht so dessen einteilige Ausführung und dessen vergleichsweise leichte Montage in einem Gehäuse, bspw. einer Filtereinrichtung.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: einen erfindungsgemäßen axial durchströmbaren Ventileinsatz in einer Einbausituation in einem Filtergehäuse einer Filtereinrichtung,
- Fig. 2: eine Detaildarstellung des erfindungsgemäßen Ventileinsatzes.

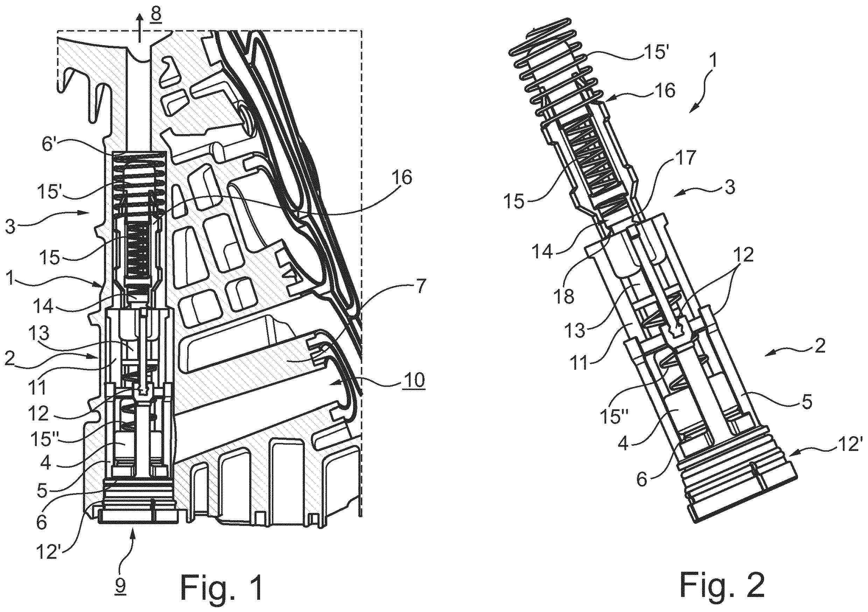

Entsprechend den Fig. 1 und 2, weist ein erfindungsgemäßer axial durchströmbarer Ventileinsatz 1 ein Rücklaufsperrventil 2 sowie ein koaxial dazu angeordnetes und in Reihe geschaltetes Thermostatventil 3 auf. Das Thermostatventil 3 und das Rücklaufsperrventil 2 sind axial zueinander beabstandet im Ventileinsatz 1 angeordnet. Das Rücklaufsperrventil 2 besitzt einen federbeaufschlagten Rücklaufsperrventilkolben 4 sowie ein Rücklaufsperrventilgehäuse 5, wobei das Rücklaufsperrventilgehäuse 5 einerseits eine Führung für den Rücklaufsperrventilkolben 4 bildet und andererseits einen Ventilsitz 6 aufweist, an welchem der federbeaufschlagte Rücklaufsperrventilkolben 4 dichtend anliegt. Betrachtet man das Rücklaufsperrventil 2 in seiner Einbausituation in einem Filtergehäuse 7 einer nicht näher gezeigten Filtereinrichtung 8 gemäß Fig. 1, bspw. einem Ölfilter eines Verbrennungsmotors in einem Kraftfahrzeug, so kann man erkennen, dass der Ventileinsatz 1 in einer Leitung zwischen dem eigentlichen Filter der Filtereinrichtung 8 und einer Pumpe 9 angeordnet ist. Öffnet der Rücklaufsperrventilkolben 4, so kann dieser in Abhängigkeit der Schaltstellung des Thermostatventils 3 einen Fluidstrom zwischen einem Ölkühler 10 und der Filtereinrichtung 8 aufteilen.

Neben dem Rücklaufsperrventil 2 besitzt der erfindungsgemäße Ventileinsatz 1 noch das Thermostatventil 3, wobei ein Thermostatventilgehäuse 11 mit dem Rücklaufsperrventilgehäuse 5 über eine Clipverbindung 12 verclipst ist. Im Thermostatventilgehäuse 11 ist ein Temperaturdehnelement 13, bspw. ein Wachsdehnelement, angeordnet, das mit einem inneren, federbeaufschlagten Thermostatventilkolben 14 zusammenwirkt. Der innere Thermostatventilkolben 14 ist dabei ebenfalls federbeaufschlagt und wirkt über eine Feder 15 mit einem äußeren Thermostatventilkolben 16 zusammen. Das Temperaturdehnelement 13 sowie der innere Thermostatventilkolben 14 sind dabei miteinander verbunden, insbesondere über einen Presssitz. Dies ermöglicht es, den Ventileinsatz 1 als einteilige und dadurch leicht zu montierende Baugruppe auszubilden. Zur Montage des Ventileinsatzes 1 im Filtergehäuse 7 wird dieser lediglich in das Filtergehäuse 7 eingeschoben und zwar soweit, bis er über eine Clipsverbindung 12' mit dem Filtergehäuse 7 verrastet. Das Filtergehäuse 7 besitzt zudem einen Ventilsitz 6' für den äußeren Thermostatventilkolben 16. Am äußeren Thermostatventilkolben 16 angeordnet ist eine weitere Feder 15', die ein Rückstellen desselben und damit ein Lösen desselben vom Ventilsitz 6' unterhalb einer vordefinierten Temperatur bewirkt.

Im Folgenden soll nun die prinzipielle Funktionsweise des erfindungsgemäßen Ventileinsatzes 1 kurz beschrieben werden: Bei abgeschaltetem Verbrennungsmotor und damit bei abgeschalteter Pumpe 9 wirkt kein Fluiddruck, insbesondere kein Öldruck, auf den Ventileinsatz 1 ein, sodass der Rücklaufsperrventilkolben 4 auf dem Ventilsitz 6 anliegt und dadurch ein ungewolltes Leerlaufen der Filtereinrichtung 8 bzw. des Ölkühlers 10 verhindert. Dies bewirkt zudem, dass kurz nach dem Starten des Verbrennungsmotors bzw. der Pumpe 9 bereits der erforderliche Öldruck vorhanden ist. Nach dem Starten des Verbrennungsmotors fördert die Pumpe 9 das zu filternde Fluid, bspw. Öl, wobei dann der Rücklaufsperrventilkolben 4 entgegen der Feder 15" verschoben und damit vom Ventilsitz 6 gelöst wird. Das zu filternde Fluid, d. h. das Öl, befindet sich dabei noch in kaltem Zustand, sodass das Temperaturdehnelement 13 im inneren Thermostatventilkolben 14 und über diesen den äußeren Thermostatventilkolben 16 noch nicht verstellt. Vielmehr befindet sich der äußere Thermostatventilkolben 16 durch die von der Feder 15' ausgeübte Federkraft noch in vom Ventilsitz 6' abgehobener Lage, sodass bei einem Starten des Verbrennungsmotors der Ventileinsatz 1 strömungsarm, d. h. mit geringem Strömungswiderstand, axial durchflossen und somit das zu filternde Fluid der Filtereinrichtung 8 zugeführt werden kann. Steigt mit fortdauernder Betriebsdauer die Temperatur des zu filternden Fluids an, so bewirkt die Dehnung des Temperaturdehnelements 13 ein Verstellen des damit gekoppelten inneren Thermostatventilkolbens 14, woraufhin dieser über die Feder 15 den äußeren Thermostatventilkolben 16 entgegen der Federkraft der Feder 15' auf den Ventilsitz 6' drückt. Beim Anliegen des äußeren Thermostatventilkolbens 16 am Ventilsitz 6' ist die direkte Verbindung zur Filtereinrichtung 8 geschlossen, woraufhin dann das zu filternde Fluid über den zum Ölkühler 10 führenden Kanal seitlich abgeleitet wird.

Steigt die Temperatur des zu filternden Fluids weiter an, so führt dies zu einer weiteren Dehnung des Temperaturdehnelements 13, wobei dieses dann weiter und mit höherer Kraft auf den inneren Thermostatventilkolben 14 drückt. Da sich der äußere Thermostatventilkolben 16 aufgrund des Anliegens am Ventilsitz 6 nicht weiter verstellen kann, wird nun der innere Thermostatventilkolben 14 relativ zum äußeren Thermostatventilkolben 16 entgegen der Federkraft der Feder 15 verstellt. Die Feder 15 zusammen mit dem inneren Thermostatventilkolben 14 bilden somit eine Überlastsicherung, die auch bei hohen Temperaturen eine Beschädigung des Thermostatventils 3 ausschließt.

Verringert sich die Temperatur des zu filternden Fluids, bspw. des zu filternden Öls, wieder, so zieht sich das Temperaturdehnelement 13 zusammen, woraufhin der innere Thermostatventilkolben 14 relativ zum äußeren Thermostatventilkolben 16 solange verstellt wird, bis er mit einer Kontur 17, bspw. einem Rand, an einer Gegenkontur 18 des äußeren Thermostatventilkolbens 16 anliegt und sich dadurch nicht mehr weiter verstellen kann. Bei einer weiteren Reduzierung der Temperatur bewirkt dann die Feder 15' ein sich Lösen des äußeren Thermostatventilkolbens 16 vom Ventilsitz 6', woraufhin dann wiederum die direkte Verbindung zur Filtereinrichtung 8 geöffnet wird.

Generell weist der erfindungsgemäße Ventileinsatz 1 eine einteilige Ausführungsform auf, wodurch eine besonders einfache Montage desselben möglich ist. Durch seine axiale Durchströmbarkeit besitzt er zudem einen vergleichsweise geringen Strömungswiderstand, was vorteilhaft in Bezug auf die Leistungsaufnahme der Pumpe 9 ist. Die einzelnen Teile des Ventileinsatzes 1, insbesondere der äußere Thermostatventilkolben 16, der Rücklaufsperrventilkolben 4 bzw. das Thermostatventilgehäuse 11 und das Rücklaufsperrventilgehäuse 5 können bspw. als kostengünstige Kunststoffbauteile ausgebildet sein.

## Patentansprüche

1. Axial durchströmbarer Ventileinsatz (1) mit einem Rücklaufsperrventil (2) und einem koaxial dazu angeordneten und in Reihe geschalteten Thermostatventil (3),
**dadurch gekennzeichnet,**
**dass** das Rücklaufsperrventil (2) einen federbeaufschlagten Rücklaufsperrventilkolben (4) und ein Rücklaufsperrventilgehäuse (5) aufweist, das einerseits eine Führung für den Rücklaufsperrventilkolben (4) bildet und andererseits einen Ventilsitz (6) aufweist.

2. Ventileinsatz nach Anspruch 1,
**dadurch gekennzeichnet,**
**dass** das Rücklaufsperrventilgehäuse (5) mit einem Thermostatventilgehäuse (11) über eine Clipverbindung (12) verclipst ist.

3. Ventileinsatz nach Anspruch 2,
**dadurch gekennzeichnet,**
**dass** im Thermostatventilgehäuse (11) ein Temperaturdehnelement (13), insbesondere ein Wachsdehnelement, angeordnet ist, das mit einem federbeaufschlagten inneren Thermostatventilkolben (14) zusammenwirkt.

4. Ventileinsatz nach Anspruch 3,
**dadurch gekennzeichnet,**
**dass** der innere Thermostatventilkolben (14) über eine Feder (15) mit einem äußeren Thermostatventilkolben (16) zusammenwirkt.

5. Ventileinsatz nach Anspruch 4,
**dadurch gekennzeichnet,**
**dass** das Temperaturdehnelement (13) und der innere Thermostatventilkolben (14) miteinander verbunden, insbesondere über einen Presssitz, miteinander verbunden sind.

6. Filtereinrichtung (8), insbesondere ein Ölfilter, mit einem Ventileinsatz (1) nach einem der Ansprüche 1 bis 5.

7. Filtereinrichtung nach Anspruch 6,
**dadurch gekennzeichnet,**
**dass** die Filtereinrichtung (8) ein Filtergehäuse (7) aufweist, in welches der Ventileinsatz (1) einsetzbar, insbesondere einclipsbar, ist.

8. Filtereinrichtung nach Anspruch 7,
**dadurch gekennzeichnet,**
**dass** das Filtergehäuse (7) einen Ventilsitz (6') für den äußeren Thermostatventilkolben (16) aufweist.

9. Filtereinrichtung nach Anspruch 7,
**dadurch gekennzeichnet,**
**dass** der Ventileinsatz (1) in Abhängigkeit des Drucks und der Temperatur des zu filternden Fluids dieses auf ein Filter, insbesondere ein Ölfilter, und einen Kühler, insbesondere einen Ölkühler, aufteilt.

## Claims

1. A valve insert (1) through which flow can pass axially, having a backstop valve (2) and a thermostat valve (3) which is arranged coaxially thereto and connected in series,
**characterised in that**
the backstop valve (2) has a spring -loaded backstop valve piston (4) and a backstop valve housing (5), which forms a guide for the backstop valve piston (4) on one side and has a valve seat (6) on the other side.

2. The valve insert according to Claim 1,
**characterised in that**
the backstop valve housing (5) is clipped to a thermostat valve housing (11) by means of a clip connection (12).

3. The filter device according to Claim 2,
**characterised in that**
a temperature expansion element (13), for example a wax expansion element, which interacts with an inner, spring-loaded thermostat valve piston (14) is arranged in the thermostat valve housing (11).

4. The valve insert according to Claim 3,
**characterised in that**
the inner thermostat valve piston (14) interacts with an outer thermostat valve piston (16) by means of a spring (15).

5. The valve insert according to Claim 4,
**characterised in that**
the temperature expansion element (13) and the inner thermostat valve piston (14) are connected to each other, in particular by means of a press fit.

6. A filter device (8), in particular an oil filter, having a valve insert (1) according to one of Claims 1 to 5.

7. The filter device according to Claim 6,
**characterised in that**
the filter device (8) has a filter housing (7) into which the valve insert (1) can be inserted, in particular clipped.

8. The filter device according to Claim 7,
**characterised in that**
the filter housing (7) has a valve seat (6') for the outer thermostat valve piston (16).

9. The filter device according to Claim 7,
**characterised in that**
the valve insert (1) distributes the fluid to be filtered to a filter, in particular an oil filter, and a cooler, in particular an oil cooler, depending on the pressure and temperature of the fluid to be filtered.

## Revendications

1. Garniture de soupape (1) pouvant être traversée en direction axiale, avec une soupape anti-retour (2) et un robinet thermostatique (3) monté en série et placé de manière coaxiale par rapport à cette dernière,
**caractérisée en ce que**
la soupape anti-retour (2) comporte un piston (4) de soupape anti-retour contraint par ressort et avec un corps (5) de soupape anti-retour qui d'une part forme un guidage pour le piston (4) de soupape anti-retour et d'autre part comporte un siège de soupape (6).

2. Garniture de soupape selon la revendication 1,
**caractérisée en ce que**
le corps (5) de soupape anti-retour est clipsé par l'intermédiaire d'un assemblage par clips (12) sur un corps (11) de robinet thermostatique.

3. Garniture de soupape selon la revendication 2,
**caractérisée en ce que**
dans le corps (11) de robinet thermostatique est placé un élément de dilatation thermique (13), notamment un élément dilatable en cire qui coopère avec un piston (14) intérieur de robinet thermostatique contraint par ressort.

4. Garniture de soupape selon la revendication 3,
**caractérisée en ce que**
le piston (14) intérieur de robinet thermostatique coopère par l'intermédiaire d'un ressort (15) avec un piston (16) extérieur de robinet thermostatique.

5. Garniture de soupape selon la revendication 4,
**caractérisée en ce que**
l'élément de dilatation thermique (13) et le piston intérieur (14) de robinet thermostatique sont reliés l'un à l'autre, notamment sont reliés l'un à l'autre par l'intermédiaire d'un ajustement serré.

6. Système de filtration (8), notamment un filtre à huile, avec une garniture de soupape (1) selon l'une quelconque des revendications 1 à 5.

7. Système de filtration selon la revendication 6,
**caractérisé en ce que**
le système de filtration (8) comporte un boîtier de filtre (7), dans lequel la garniture de soupape (1) peut s'insérer, notamment se clipser.

8. Système de filtration selon la revendication 7,
**caractérisé en ce que**
le boîtier de filtre (7) comporte un siège de soupape (6') pour le piston (16) extérieur de robinet thermostatique.

9. Système de filtration selon la revendication 7,
**caractérisé en ce**
**qu'**en fonction de la pression et de la température du fluide à filtrer, la garniture de soupape (1) distribue ce dernier sur un filtre, notamment un filtre à huile et un refroidisseur, notamment un refroidisseur d'huile.
